Europäisches Patentamt

European Patent Office

Office européen des brevets

(19)

(11) Numéro de publication : **0 053 527**
**B1**

(12) FASCICULE DE BREVET EUROPÉEN

(45) Date de publication du fascicule du brevet :
26.09.84

(51) Int. Cl.³ : **G 01 N 21/76**

(21) Numéro de dépôt : **81401697.8**

(22) Date de dépôt : **27.10.81**

(54) Procédé et appareil d'analyse directe et continue de traces d'arsine.

(30) Priorité : **27.11.80 FR 8025143**

(43) Date de publication de la demande :
**09.06.82 Bulletin 82/23**

(45) Mention de la délivrance du brevet :
**26.09.84 Bulletin 84/39**

(84) Etats contractants désignés :
**BE CH DE FR GB IT LI NL SE**

(56) Documents cités :
**FR-A- 2 285 612**
**PATENTS ABSTRACTS OF JAPAN, volume 2, no. 17,**
**6 décembre 1978 page 10018 E77**
**ISA TRANSACTIONS, volume 16, no. 2, 1977 G.**
**TURNER "Process industry applications of chemilu-**
**minescence analyzers", pages 67-70.**
**ISA TRANSACTIONS, volume 15, no. 3, 1976 G.**
**HEYMAN "Some considerations in determining oxi-**
**des of nitrogen in stack gases by chemiluminescence**
**analyzer", pages 209-213**
**ADVANCES IN INSTRUMENTATION, volume 31, no.**
**3, mars 1976 G. TURNER "Process industry applica-**
**tions of chemiluminescence analyzers", section 739,**
**pages 739-1 à 739-3**

(73) Titulaire : **L'AIR LIQUIDE, SOCIETE ANONYME POUR**
**L'ETUDE ET L'EXPLOITATION DES PROCEDES**
**GEORGES CLAUDE**
**75, Quai d'Orsay**
**F-75321 Paris Cedex 07 (FR)**

(72) Inventeur : **Louise, Jean**
**22, Allée des Plantes**
**F-94800 Villejuif (FR)**
Inventeur : **Belot, Dominique**
**1, rue du Pavillon**
**F-78510 Triel-sur-Seine (FR)**
Inventeur : **Politi, Jean-Marie**
**10, rue Alfred de Musset**
**F-77340 Pontault-Combaut (FR)**

(74) Mandataire : **Bouton Neuvy, Liliane et al**
**L'Air liquide, Société Anonyme pour L'Etude et**
**L'Exploitation des Procédés Georges Claude 75,**
**Quai d'Orsay**
**F-75321 Paris Cedex 07 (FR)**

## Description

La présente invention concerne l'analyse directe et continue de traces d'arsine à des teneurs inférieures à 1 p.p.m. volume.

Depuis plusieurs années, l'arsine est utilisée en quantités croissantes dans l'industrie électronique ; or, l'on sait que cet hydrure gazeux est extrêmement dangereux par sa toxicité et sa tendance à l'inflammabilité. La concentration maximale admissible (C. M. A.) dans une armosphère de travail pour une exposition de huit heures par jour et cinq jours par semaine est de 0,05 p.p.m. volume.

Il s'avère donc tout à fait indispensable de pouvoir disposer d'analyseurs jouant notamment le rôle d'appareils de détection fiables, sensibles, à temps de réponse très court, d'un emploi facile pour surveiller en permanence l'atmosphère des salles où l'arsine est mise en œuvre.

Dans un autre domaine technique, on connaît l'enseignement de la demande de brevet français 2.285.612 qui propose la détermination de composés chimiques par chimiluminescence avec l'ozone en utilisant un détecteur, avec application à la détermination sélective des oléfines et des dioléfines sans interférence avec des hydrocarbures aromatiques et paraffiniques.

Depuis environ au moins quinze années on a recherché et proposé diverses méthodes d'analyse et de détection. Parmi les appareils de détection actuellement disponibles pour l'arsine, on trouve principalement les spectromètres infrarouges, les colorimètres, les détecteurs à photoionisation, les détecteurs à semi-conducteurs.

Les spectromètres infrarouges, même les plus élaborés, ne permettent pas de détecter l'arsine au niveau de la concentration maximale admissible.

Dans la gamme des colorimètres, on trouve les tubes colorimétriques et les colorimètres à bande imprégnée.

Les tubes colorimétriques permettent de détecter avec une bonne fiabilité la concentration maximale de l'arsine, mais ils présentent l'inconvénient de ne pouvoir être couplés à un système de surveillance automatique en continu à déclenchement d'alarme.

Les colorimètres à bande imprégnée assurent la détection de l'arsine mais avec l'obligation d'un changement périodique de la bande réactive imprégnée du réactif toxique et un temps de réponse supérieur à 5 min. pour la C. M. A. ; ce qui est en défaveur de la surveillance automatique en continu et de la sécurité. Car en raison de la haute toxicité de l'arsine, l'absence de détection d'une fuite de quelques p.p.m. volume peut en quelques minutes provoquer des lésions irréversibles, ainsi en trente minutes une fuite de 10 p.p.m. volume pollue l'atmosphère d'une teneur correspondant à la dose mortelle.

Avec les détecteurs à photoionisation en analyse directe, c'est-à-dire en analysant directement l'air ambiant, les sensibilités obtenues sont mauvaises de l'ordre de quelques p.p.m., ce qui les rend inutilisables pour la surveillance de l'atmosphère des locaux d'utilisation de l'arsine. Dans le cas d'une préséparation chromatographique, les détecteurs à photoionisation conduisent à une sensibilité en principe meilleure, mais avec un temps de réponse, c'est-à-dire la durée de rétention de l'arsine dans la colonne, devenant très long. Or, en raison de la toxicité très élevée de l'arsine, ce procédé ne peut pas être considéré comme satisfaisant du point de vue de la sécurité, d'autant plus que le transfert de l'arsine à très basse teneur dans une colonne de chromatographie est très délicat, d'où la possibilité de se trouver en présence d'une réponse par défaut, ce qui accroît l'insécurité et le manque de fiabilité.

Dans la classe des détecteurs à semi-conducteurs, les appareils actuellement disponibles sont très sensibles à beaucoup de composés, notamment à des gaz naturellement présents dans l'air, tels l'humidité, l'anhydride carbonique et l'oxyde de carbone, et de ce fait ne présentent pas une spécificité suffisante pour analyser et détecter de très basses teneurs en arsine.

En conséquence, on constate que les appareils d'analyse et de détection mis dans le commerce ne répondent que partiellement aux impératifs mis dans le commerce ne répondent que partiellement aux impératifs de sélectivité et sécurité, surtout du fait de la lenteur de leur réponse. Malgré de nombreux travaux poursuivis pendant de longues années, on est toujours à la recherche d'une méthode permettant le dosage sélectif de traces d'arsine dans des conditions telles qu'elle conduise à la réalisation d'appareils répondant aux critères de sécurité exigée dans les industries de l'électronique et de la métallurgie des non ferreux.

Il a été trouvé un procédé qui pallie les inconvénients des méthodes connues et dont la mise en œuvre du principe permet aux industriels de disposer d'appareils d'analyse et de détection fiables, efficaces, sélectifs, très sensibles, à temps de réponse extrêmement court, d'un emploi simple pour surveiller automatiquement en continu et en analyse directe l'atmosphère des ateliers éventuellement polluée par des traces d'arsine, en évitant la détection de gaz parasites.

Selon l'invention les traces d'arsine à très basses teneurs inférieures à 1 p.p.m. volume dans un gaz vecteur sont détectées et dosées, en analyse directe et continue, par émission chimiluminescente de l'arsine en présence d'ozone.

Selon un mode de mise en œuvre le spectre émis par la chimiluminescence de l'arsine après filtration optique est photomultiplié.

Le procédé est mis en œuvre dans un détecteur à chimiluminescence dont une chambre de réaction, un tube photomultiplicateur, une imprimante à alarme et des contacts à alarme sont les caractéristiques essentielles de la structure. En outre, l'appareil comprend un ozoneur, un dispositif d'étalonnage avec un injecteur du mélange étalon et une capacité d'homogénisation, les circuits de l'atmosphère à contrôler et de l'ozone sont munis de rotamètres et de débitmètres assurant le contrôle des débits introduits dans la chambre de réaction, à la sortie de celle-ci un filtre optique est intercalé avant le tube photomultiplicateur logé dans une enceinte refroidie, un tiroir électronique comprenant un amplificateur qui assure les contrôles et les régulations avant la transmission à l'imprimante à alarme à plusieurs voies, elle-même en relation avec les contacts à alarme. Ces contacts à alarme sont des détecteurs de défauts qui déclenchent des signaux relayés qui renforcent la sécurité de l'appareil analyseur-détecteur. Ces contacts à alarme préviennent de toutes les éventuelles anomalies de fonctionnement de l'appareil, à savoir un défaut d'alimentation électrique, l'absence de circulation de l'échantillon dans la chambre de réaction, le manque d'ozone, etc...

On procède à l'étalonnage de l'appareil en injectant un mélange étalon d'arsine dont la teneur est de l'ordre de quelques p.p.m. dans un système de dilution qui permet d'envoyer dans la chambre de réaction une concentration connue d'arsine voisine de la C. M. A. On vérifie alors la réponse de l'appareil.

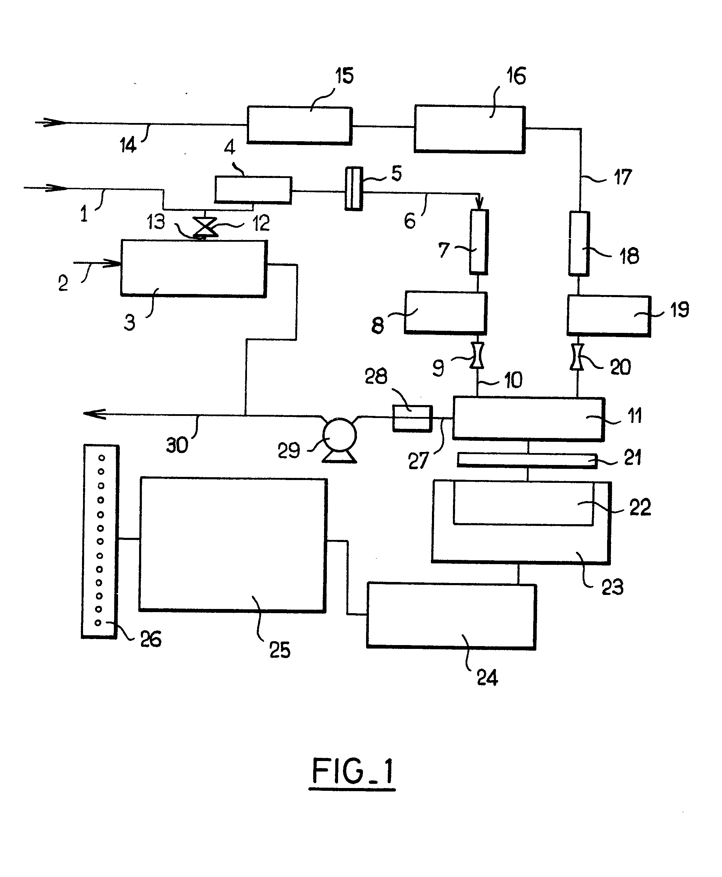

Sur la figure 1 du dessin annexé représentant l'appareil, on voit que l'air à contrôler, prélevé dans l'atmosphère est véhiculé par la canalisation (1), dans laquelle arrive le mélange étalon arsine-azote introduit par la canalisation (2) dans le diluteur étalon (3). Après homogénisation dans la chambre d'homogénisation (4), l'air à contrôler traverse un filtre (5) retenant les poussières, par le circuit (6) le mélange pénètre dans le rotamètre (7), puis débitmètre (8), après passage à travers l'orifice sonique (9) il arrive par la canalisation (10) dans la chambre de réaction (11). En position mesure, la vanne (12) située sur le circuit (13) arrête le débit du mélange étalon et ne laisse pénétrer dans ladite chambre de réaction (11) que l'air ambiant à contrôler.

L'oxygène d'alimentation de l'ozoneur circulant dans la canalisation (14) est desséché dans le dessiccateur (15) avant de passer dans l'ozoneur (16), l'oxygène ozonisé est véhiculé par la canalisation (17) vers les rotamètre (18), débitmètre (19) et orifice sonique (20). L'appareil fonctionnant par aspiration et sous dépression, les débits de l'air à analyser et de l'oxygène ozonisé sont contrôlés par les rotamètres et débitmètres avant l'entrée dans la chambre de réaction (11). Le spectre émis par la chimiluminescence de l'arsine après passage à travers le filtre optique (21) est transmis au tube photomultiplicateur (22), situé à l'intérieur de l'enceinte refroidie (23). L'amplificateur alimenté en haute tension (24) reprend le signal en le transmettant vers l'imprimante à l'alarme (25), en (26) se situent les contacts à alarme. Le temps de réponse de l'appareil est uniquement lié à la longueur des lignes de transfert de l'air à analyser et du volume de la chambre de réaction. Avec ce type de montage, il est de 10 secondes. A titre d'exemple, on peut indiquer un débit de 18 à 20 litres/heure pour l'oxygène ozonisé, le débit de l'air à contrôler entrant dans la chambre de réaction étant de 72 à 75 litres/heure.

L'air contrôlé quitte en continu la chambre de réaction par la conduite (27) et traverse le filtre à ozone (28) dans lequel s'effectue la destruction de l'ozone, l'air est ensuite repris par la pompe (29) puis évacué par la conduite (30).

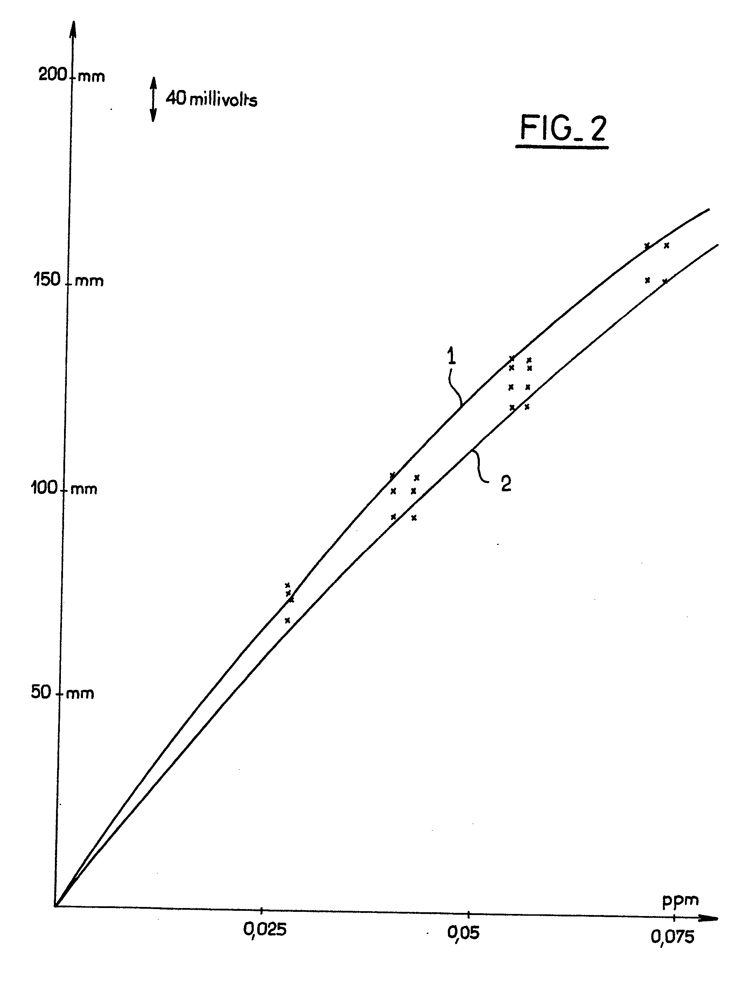

Les résultats obtenus sont résumés sur les courbes 1 et 2 de la Figure 2, la courbe 1 correspond à de l'air ambiant et la courbe 2 à de l'air sec ; en abscisses, sont portées les teneurs en arsine exprimées en p.p.m. et sur l'axe des ordonnées, les élongations du signal en millimètres (mm) mesurées sur la bande d'enregistrement.

Tableau I

| | |
|---|---|
| Echelle enregistreur | 1 volt |
| Amplitude du bruit de fond | 2 millivolts |
| Dérivé maximum sur 12 heures | 2 millivolts |
| Seuil de détection pratique dans l'air ambiant (5 fois le bruit de fond) | 0,002 p.p.m. |
| C.M.A. Arsine | 0,05 p.p.m. |

Le mode de détection est rendu spécifique de l'arsine par le choix de la bande passante du filtre optique.

On constate que pour les conditions décrites, la technique et le matériel utilisés permettent de suivre spécifiquement en continu la teneur de l'arsine dans une atmosphère et le couplage a une alarme aisée et de mise en œuvre très simple.

**Revendications**

1. Procédé d'analyse directe et continue de traces d'arsine à très basses teneurs inférieures à 1 p.p.m. volume dans un gaz vecteur, caractérisé en ce que lesdites traces sont détectées et dosées par émission chimiluminescente de l'arsine en présence d'ozone.

2. Procédé d'analyse d'arsine selon la revendication 1, caractérisé en ce que le spectre émis par la chimiluminescence de l'arsine après filtration optique est photomultiplié.

3. Appareil analyseur et détecteur permettant la mise en œuvre du procédé selon une des revendications 1 ou 2, caractérisé en ce qu'il comprend un ozoneur (16), une chambre de réaction de l'arsine avec l'ozone (11), un filtre optique (21), un photomultiplicateur (22), et une imprimante à alarme (25).

4. Appareil selon la revendication 3, caractérisé en ce qu'il comprend en outre des contacts alarme (26).

5. Appareil analyseur et détecteur selon la revendication 3, caractérisé en ce qu'il comprend un ozoneur (16), un dispositif d'étalonnage (3) avec un injecteur, une capacité d'homogénisation (4), une chambre de réaction (11), un filtre optique (21), un photomultiplicateur (22), un amplificateur (24), une imprimante à alarme (25) en relation avec des contacts à alarme (26).

**Claims**

1. Method for the direct continuous analysis of traces of arsine of very low contents below 1 ppm by volume within a carrier gas, characterized in that the said traces are detected and determined by chemiluminescent emission of the arsine in presence of ozone.

2. Method of analysis of arsine according to claim 1, characterized in that the spectrum emitted by the chemiluminescence of the arsine is photomultiplied after optical filtration.

3. Analyzing and detecting apparatus permitting to carry out the method according to one of the claims 1 or 2, characterized in that it comprises an ozoniser (16), a chamber of reaction of the arsine with the ozone (11), an optical filter (21), a photomultiplier (22) and an alarm printer (25).

4. Apparatus according to claim 3, characterized in that it comprises additionally alarm contacts (26).

5. Analyzing and detecting apparatur according to claim 3, characterized in that it comprises an ozoniser (16), calibration means (3) with an injector, a homogenization capacity (4), a reaction chamber (11), an optical filter (21), a photomultiplier (22), an amplifier (24), an alarm printer (25) in relation to alarm contacts (26).

**Ansprüche**

1. Verfahren zur direkten und kontinuierlichen Analyse von Arsinspuren in sehr geringen Gehalten unterhalb 1 Volumen-ppm in einem Trägergas, dadurch gekennzeichnet, daß diese Spuren durch Chemolumineszenzemission von Arsin in Gegenwart von Ozon ermittelt und bestimmt werden.

2. Arsinalyseverfahren nach Anspruch 1, dadurch gekennzeichnet, daß das durch die Chemolumineszenz des Arsins emittierte Spektrum nach optischer Filtration photovervielfacht wird.

3. Analysen- und Ermittlungsvorrichtung, die die Durchführung des Verfahrens nach einem der Ansprüche 1 oder 2 gestattet, dadurch gekennzeichnet, daß sie einen Ozonisator (16), eine Kammer für die Umsetzung des Arsins mit dem Ozon (11), ein optisches Filter (21), einen Photovervielfacher (22) und einen Alarmdrucker (25) besitzt.

4. Vorrichtung nach Anspruch 3, dadurch gekennzeichnet, daß sie außerdem Alarmkontakte (26) aufweist.

5. Analysen- und Ermittlungsvorrichtung nach Anspruch 3, dadurch gekennzeichnet, daß sie einen Ozonisator (16), eine Eichvorrichtung (3) mit einem Injektor, eine Homogenisierungskapazität (4), eine Reaktionskammer (11), ein optisches Filter (21), einen Photovervielfacher (22), eine Verstärker (24), einen Alarmdrucker (25) in Verbindung mit Alarmkontakten (26) besitzt.

FIG_1

FIG_2